# EUROPÄISCHE PATENTSCHRIFT

(11) **EP 2 380 523 B1**
(45) Veröffentlichungstag und Bekanntmachung des Hinweises auf die Patenterteilung: **08.11.2017**
(21) Anmeldenummer: 10004165.6
(22) Anmeldetag: 20.04.2010
(51) Int. Cl.: A61C 8/00, A61C 19/06

(54) **Schraube für ein zahnmedizinisches Implantat**
Screw for a dental implant
Vis pour un implant dentaire

(43) Veröffentlichungstag der Anmeldung: 26.10.2011
(73) Patentinhaber: ZL Microdent-Attachment GmbH & Co. KG, 58339 Breckerfeld (DE)
(72) Erfinder: Clostermann, Volkhard-Hagen, 58097 Hagen (DE); Graf, Hans-Ludwig, Prof. Dr. med. dent., 04451 Borsdorf (DE); Schreckenbach, Joachim P., Dr. rer. nat., 09337 Hohenstein-Ernstthal (DE)
(74) Vertreter: Patentanwälte Dörner & Kötter PartG mbB

(56) Entgegenhaltungen:
- EP-A1- 1 943 977
- WO-A1-84/02264
- WO-A1-2007/005679
- WO-A1-2009/006887
- US-A1- 2007 016 163

## Beschreibung

Die Erfindung betrifft eine Schraube zum Einschrauben in ein zahnmedizinisches Implantat zur Befestigung eines Abutments nach dem Patentanspruch 1. Die Erfindung betrifft weiterhin ein nicht therapeutisches Verfahren zum Verfüllen von nach Einbringung eines Implantataufbaus in ein Implantat verbleibenden Hohlräumen nach dem Patentanspruch 6. Zahnärztliche Implantatsysteme werden häufig als zwei- und mehrteilige Konstruktionen ausgeführt, um zum Einen eine unbelastete Einheilung des eigentlichen Implantatkörpers zu ermöglichen und zum Anderen eine gute Servicebarkeit über die gesamte Verweildauer des Therapiemittels im Körper zu erreichen. Dies hat zwingend zur Folge, dass die Konstruktionen innere Spalten und Hohlräume aufweisen, die mit Körperflüssigkeiten gefüllt und von Mikroorganismen besiedelt werden können. Im Zuge dieses Vorganges entstehen gesetzmäßig Biofilme an den inneren Implantatoberflächen. Biofilme sind adsorbierte körpereigene Stoffe auf einer alloplastischen Oberfläche in denen Mikroorganismen (vor allem Bakterien) leben. Diese Mikroorganismen sind durch die eigentümliche Struktur des Biofilmes gegen angreifende Therapeutika (z. B. Antibiotika) so gut geschützt, dass allgemein davon ausgegangen wird, dass diese Erreger mit normalen Antibiotikadosen nicht oder nur sehr schwer angreifbar sind. Außer dem Aufbau derartiger Biofilme wird auch das gesamte Volumen der innerimplantären Hohlräume mit biogenem Material und Mikroorganismen gefüllt. Die Folge davon ist eine innere Kontamination der Implantatkonstruktion, die in Geruch und Geschmack, weitgehend auch in der mikrobiellen Erregerzusammensetzung dem Krankheitsbild einer Gangrän am natürlichen Zahn gleicht. Diese Besiedlung mit Mikroorganismen kann die Entzündung der perümplantären Gewebe (Perümplantitis) auslösen oder begünstigen, welche wiederum die Funktionsdauer eines Implantates begrenzt. Implantatsysteme bei denen nichtklebende lasttragende elastische Bauteile an der technischen Ausbildung der Schnittstelle zwischen Implantat und Aufbauteil beteiligt und die verbleibenden Hohlräume nicht gefüllt sind, zeigen durch den unter der intermittierenden (Kau-)Last eintretenden Pumpeffekt eine so starke mikrobielle Besiedlung, dass durch das regelmäßige Auspressen des mikrobiellen Implantatinhaltes in das periimplantäre Gewebe verstärkt Knochenabbauvorgänge ausgelöst werden.

Mit mechanischen Mitteln ist es bisher nicht gelungen, einen dauerhaften bakteriendichten Abschluss des Implantatinneren gegen die umgebenden Körperstrukturen zu realisieren und damit eine Besiedelung dieser Hohlräume mit Mikroorganismen dauerhaft zu verhindern.

Bekannt sind die Lösungen über eine innere Quetschkonuspassung, eine äußere Dichtlippenpassung und über einen in der Implantatinnenverbindung platzierten O-Ring. Allen Konstruktionen ist eigen, dass sie in vitro ohne mechanische Last den gestellten Anforderungen gerecht werden. Da die Implantat-Aufbauteile unter Last jedoch trotz ausgeklügelter Schnittstellengeometrien und der über die Verschraubung aufgebauten Verspannungen zwischen Implantat und Aufbauteil lastabhängig kippende Bewegungen ausführen, ist von einer immer wiederkehrenden Öffnung der Abdichtung zwischen Implantat und Aufbauteil auszugehen. Entsprechende innere Besiedelungen wurden nachgewiesen. Auch die tägliche klinische Praxis lässt bei Recall-Untersuchungen, bei denen die Verbindung zwischen Implantat und Aufbauteil gelöst wird, die während der Nutzung eingetretene mikrobielle Besiedelung am fötiden Geruch erkennen.

Weiterhin ist bekannt, ein Implantat-Aufbauteil ohne Schraube in einem Implantat mittels geklebter Clip-Verbindung zu befestigen. Mit der Klebung ist eine Füllung der inneren Hohlräume des Implantates verbunden. Der Kleber wird dabei im aktivierten Zustand von außen über ein aufwendiges handhabungsunfreundliches Dosiersystem eingebracht. Dieses Dosiersystem ist (trotz verschiedener technischer Lösungen) in der Präzision seiner Dosiermöglichkeit durch die Aufwendigkeit der Konstruktion begrenzt, da die Beschaffung durch jede Zahnarztpraxis einen marktfähigen Preis voraussetzt. Außerdem beginnt die Verarbeitungszeit des Klebers bereits bei der Mischung der Komponenten im Dosiersystem, so dass bei Verklebung mehrere Implantate mit einem Kleber aus einunddemselben Gebinde eine mit zunehmender Implantatzahl abnehmende Manipulationszeit pro Implantat entsteht.

WO2009/006887 A1 und EP 1 943 977 A1 offenbaren gattungsgemäße Schraube zum Einschrauben in ein zahnmedizinisches Implantat.

Um die innere Kontamination und Besiedelung zwei- und mehrteiliger Implantatkonstruktionen mit Körperflüssigkeiten und Erregern zu verhindern, ist ein dauerhafter Abschluss der innerimplantären Hohlräume gegen die keimbeladene Umgebung durch eine Füllmasse erforderlich.

Aufgabe der Erfindung ist es, Mittel zur Verfüllung von nach Einbringung eines Aufbaus in ein Implantat verbleibenden Hohlräumen bereit zu stellen, welche die vorgenannten Nachteile vermeidet. Gemäß der Erfindung wird diese Aufgabe durch die Merkmale des Patentanspruchs 1 gelöst. Mit der Erfindung ist eine Schraube zum Einschrauben in ein zahnmedizinisches Implantat zur Befestigung eines Abutments geschaffen, welche die Verfüllung von innerimplantären Hohlräumen ermöglicht. Die Verfüllung erfolgt durch ein in wenigstens ein Gebinde gefülltes Fluid, welches nach Zerstörung des Gebindes durch einen verschiebbaren Kolben über Austrittsöffnungen des Hohlraums, in dem das wenigstens eine Gebinde angeordnet ist, in die Hohlräume austritt. Der Kolben ist hierzu in dem Hohlraum verschiebbar gelagert.

In Weiterbildung der Erfindung sind in dem Hohlraum mit einem Fluid befüllte Mikrokapseln angeordnet. Die insbesondere aus dem Bereich der Textilindustrie bekannte Mikrokapselungstechnik ermöglicht die Entwicklung und Herstellung von membranintegrierten Fluiden. Die Membran dient dabei als Isolier- und Schutzschicht vor Einflüssen der Umgebung. Die Größe der Mikrokapseln reicht von 0,5 bis 2000 Mikron. Die Freisetzung des gekapselten Fluids erfolgt durch Zerstörung der Membran.

In Ausgestaltung der Erfindung sind die Austrittsöffnungen durch in den Gewindezapfen eingebrachte Längsschlitze gebildet. Die Längsschlitze sind dabei derart dimensioniert, dass die Mikrokapseln selbst nicht hindurchtreten können. Alternativ oder zusätzlich können Austrittsöffnungen durch eine poröse Ausbildung des Gewindezapfens gebildet sein.

In weiterer Ausgestaltung der Erfindung ist der Kolben derart in der Schraube angeordnet, dass eine Verschiebung des Kolbens erst nach Aufbringen einer Grenzkraft erfolgt. Hierdurch ist ein definierter Austritt des Fluids beim Einbringen der Schraube in das Implantat ermöglicht. Eine versehentliche Zerstörung der Mikrokapseln bei der Handhabung der Schraube ist so vermieden.

Bevorzugt ist die dem Hohlraum zugewandte Oberfläche des Kolbens derart ausgebildet, dass die Zerstörung der Gebinde bei Beaufschlagung mit dem Kolben gefördert wird. Hierdurch ist eine hochgradige Zerstörung der in dem Hohlraum befindlichen Mikrokapseln bewirkt. Bevorzugt hat das Fluid eine Wirkung als Pharmakon oder Desinfizienz.

Der Erfindung liegt weiterhin die Aufgabe zu Grunde, ein Verfahren zur Verfüllung von nach Einbringung eines Aufbaus in ein Implantat verbleibenden Hohlräume bereitzustellen, welche die vorgenannten Nachteile vermeidet. Gemäß der Erfindung wird diese Aufgabe durch die Merkmale des Patentanspruchs 6 gelöst.

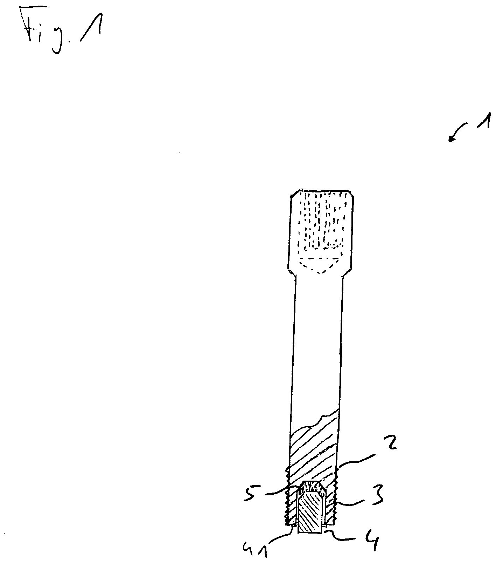

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Die einzige Figur 1 zeigt die schematische Darstellung einer erfindungsgemäßen Schraube.

Die als Ausführungsbeispiel gewählte Schraube 1 weist einen Gewindezapfen 2 auf, in den entlang der Mittelachse der Schraube 1 ein Hohlraum 3 eingebracht ist. In dem Hohlraum 3 ist ein Kolben 4 verschieblich gelagert. Dabei ist der Kolben 4 derart in dem Hohlraum 3 der Schraube 1 angeordnet, dass eine Verschiebung des Kolbens 4 erst nach Aufbringen einer Grenzkraft erfolgt. Hierzu ist der Kolben 4 im Ausführungsbeispiel mit einem umlaufenden Grat 41 versehen, welcher außen an dem Gewindezapfen 2 anliegt. Bei Überschreiten einer Grenzkraft wird dieser Grat 41 abgeschert; der Kolben 4 wird in den Hohlraum 3 verschoben.

In dem Hohlraum 3 sind im Ausführungsbeispiel mit einem Fluid gefüllte Mikrokapseln 5 angeordnet. Im Ausführungsbeispiel ist das Fluid ein Kleber mit desinfizierender Wirkung. Die Außenwände des Hohlraums 3 sind porös ausgebildet, derart, dass nach Zerstörung der Mikrokapseln 5 durch den Kolben 4 das austretende Fluid hindurchtreten kann. Alternativ oder zusätzlich können in dem Gewindezapfen 2 hierzu mehrere Längsschlitze eingebracht sein. Um einen hohen Grad der Zerstörung der in dem Hohlraum 3 befindlichen Mikrokapseln 5 zu erzielen, ist die dem Hohlraum zugewandte Oberfläche des Kolbens 4 mit einer Rauhigkeit versehen. Dabei ist der Kolben 4 an seinem Ende konisch ausgebildet, wodurch eine hohe Berührungsfläche zwischen Kolben 4 und Mikrokapseln 5 bewirkt ist.

Wird die Schraube 1 in die Gewindesackbohrung eines Implantats eingeschraubt, wird nach Anschlagen des Kolbens an den Grund der Gewindesackbohrung der Kolben 4 in den Hohlraum 3 hineinbewegt, wodurch die mit dem Fluid gefüllten Mikrokapseln 5 zerstört werden. Das Fluid wird durch den Kolben 4 durch die porösen Außenwände des Hohlraums 3 in die innerimplantären Hohlräume gepresst.

## Patentansprüche

1. Schraube zum Einschrauben in ein zahnmedizinisches Implantat zur Befestigung eines Abuttments, umfassend einem Gewindezapfen, der in das zahnmedizinische Implantat einschraubbar ist, wobei der Gewindezapfen (2) einen Hohlraum (3) zur Aufnahme wenigstens eines mit einem Fluid gefüllten Gebindes aufweist, welcher mit einem in den Hohlraum (3) verschiebbaren Kolben (4) verschließbar ist, wobei der Hohlraum (3) Austrittsöffnungen für das Fluid aufweist, welche durch in den Gewindezapfen (2) eingebrachte Längsschlitze und/ oder durch eine poröse Ausbildung des Gewindezapfens (2) gebildet sind.

2. **Schraube** nach Anspruch 1, **dadurch gekennzeichnet, dass** in dem Hohlraum (3) mit einem Fluid befüllte Mikrokapseln (5) angeordnet sind.

3. **Schraube** nach einem der vorgenannten Ansprüche, **dadurch gekennzeichnet, dass** der Kolben (4) derart in der Schraube (1) angeordnet ist, dass eine Verschiebung des Kolbens (4) erst nach Aufbringen einer Grenzkraft erfolgt.

4. **Schraube** nach einem der vorgenannten Ansprüche, **dadurch gekennzeichnet, dass** die dem Hohlraum (3) zugewandte Oberfläche des Kolbens (4) derart ausgebildet ist, dass die Zerstörung der Gebinde bei Beaufschlagung mit dem Kolben (4) gefördert wird.

5. **Schraube** nach einem der vorgenannten Ansprüche, **dadurch gekennzeichnet, dass** das Fluid eine Wirkung als Pharmakon oder Desinfizienz hat.

6. Nicht therapeutisches Verfahren zum Verfüllen von nach Einbringung eines Abutments in ein Implantat verbleibenden Hohlräumen, wobei eine Schraube (1) nach einem der vorgenannten Ansprüche in die Sackbohrung des Implantats eingeschraubt wird, wodurch der Kolben (4) in den Hohlraum (3) hineinbewegt wird und die mit einem Fluid gefüllten Gebinde zerstört werden und das Fluid in die innerimplantären Hohlräume gepresst wird.

## Claims

1. Screw for screwing into a dental implant for securing an abutment, comprising a threaded stem which is screwed into the dental implant, where the threaded stem (2) has a cavity (3) to receive at least one fluid-filled container which is closed by a plunger (4) which is pushed into the cavity (3), where the cavity (3) has outlet openings for the fluid which are formed by longitudinal slots made in the threaded stem (2) and/or by a porous design of the threaded stem (2).

2. Screw in accordance with claim 1, **characterised in that** micro-capsules (5) filled with a fluid are arranged in the cavity (3).

3. Screw in accordance with either of the preceding claims, **characterised in that** the plunger (4) is arranged in the screw (1) in such a way that movement of the plunger (4) takes place only when a threshold force is exerted.

4. Screw in accordance with any of the preceding claims, **characterised in that** the surface of the plunger (4) facing the cavity (3) is designed in such a way that the destruction of the containers is facilitated when force is applied with the plunger (4).

5. Screw in accordance with any of the preceding claims, **characterised in that** the fluid acts as a pharmaceutical or disinfectant.

6. Non-therapeutic process for filling cavities remaining after insertion of an abutment into an implant, where a screw (1) in accordance with any of the preceding claims is screwed into the bore of the implant, whereby the plunger (4) is moved into the cavity (3) and the fluid-filled containers are destroyed and the fluid is forced into the cavities in the interior of the implant.

## Revendications

1. Vis à visser dans un implant dentaire pour fixer un pilier, comprenant un pivot fileté qu'il est possible de visser dans l'implant dentaire, sachant que le pivot fileté (2) présente une cavité (3) servant à recevoir au moins un récipient rempli d'un fluide, récipient qu'il est possible d'obturer avec un piston (4) coulissant dans la cavité (3), sachant que la cavité (3) présente des orifices de sortie du fluide qui sont formés par des ouïes longitudinales ménagées dans le pivot fileté (2) et/ou par une configuration poreuse du pivot fileté (2).

2. Vis selon la revendication 1, **caractérisé en ce que** dans la cavité (3) sont disposées des microcapsules (5) remplies d'un fluide.

3. Vis selon l'une des revendications précédentes, **caractérisé en ce que** le piston (4) est disposé de telle sorte dans la vis (1) qu'un déplacement du piston (4) n'a lieu qu'après application d'une force limite.

4. Vis selon l'une des revendications précédentes, **caractérisé en ce que** la surface du piston (4) qui regarde la cavité (3) est configurée de telle sorte que la destruction des récipients est favorisée par l'exercice d'une pression avec le piston (4).

5. Vis selon l'une des revendications précédentes, **caractérisé en ce que** le fluide a un effet de médicament ou de désinfectant.

6. Procédé non thérapeutique pour combler des cavités restantes après introduction d'un pilier dans un implant, sachant qu'une vis (1) selon l'une des revendications précédentes est vissée dans le trou borgne de l'implant, faisant que le piston (4) est déplacé en direction de l'intérieur de la cavité (3) et que les récipients remplis d'un fluide sont détruits et que le fluide est forcé à pénétrer dans les cavités intérieures de l'implant.
